# FASCICULE DE BREVET EUROPEEN

(11) **EP 2 674 860 B1**
(45) Date de publication et mention de la délivrance du brevet: **15.01.2020**
(21) Numéro de dépôt: 13170888.5
(22) Date de dépôt: 06.06.2013
(51) Int. Cl.: G06F 9/48, G06F 9/50, H04L 29/08

(54) **Procédé de traitement de données par un module de navigation**
Datenverarbeitungsverfahren durch ein Navigationsmodul
Method for data processing by a navigation module

(30) Priorité: 11.06.2012 FR 1255446
(43) Date de publication de la demande: 18.12.2013
(73) Titulaire: Orange, 75015 Paris (FR)
(72) Inventeur: Giraud, Jérôme, 14000 Caen (FR); Lalande, Sylvain, 14260 Bauquay (FR)

(56) Documents cités:
- WO-A1-2012/013893
- FR-A1- 2 967 856
- US-A1- 2009 254 998
- LITZKOW M J ET AL: "Condor-a hunter of idle workstations", DISTRIBUTED COMPUTING SYSTEMS, 1988., 8TH INTERNATIONAL CONFERENCE ON SAN JOSE, CA, USA 13-17 JUNE 1988, WASHINGTON, DC, USA,IEEE COMPUT. SOC. PR, US, 13 juin 1988 (1988-06-13), pages 104-111, XP010013077, DOI: 10.1109/DCS.1988.12507 ISBN: 978-0-8186-0865-0
- Ido Green: "Web Workers" In: "Web Workers", 5 juin 2012 (2012-06-05), O'Reilly, XP055056497, pages 1-60, * le document en entier *

## Description

L'invention concerne le traitement distribué de données dans un réseau de communications.

La technologie de type « Grid Computing » (pour grille informatique en français) permet d'utiliser des ressources distribuées pour effectuer un ou des traitements de données lourds de manière plus rapide que si ces traitements étaient effectués par un seul terminal. Le « Grid Computing » consiste à répartir sur un grand nombre de terminaux clients d'un système distribué les traitements à effectuer.

Le principe est d'utiliser les ressources non utilisées par les utilisateurs des terminaux clients. Les traitements peuvent ainsi être effectués en tâche de fond sans impacter l'utilisateur d'un terminal client.

Pour cela, il est nécessaire que chaque terminal client télécharge localement les données et commandes de traitements à effectuer, par exemple sous la forme d'un logiciel dédié à exécuter. Cette technologie nécessite donc la participation des utilisateurs des terminaux clients. Lorsqu'ils ne retirent pas de bénéfice direct de l'utilisation des ressources de leur terminal, les utilisateurs ont souvent tendance à désactiver, voire à supprimer le logiciel dédié, ce qui diminue les performances de traitement du système distribué de « Grid Computing ».

Il existe donc un besoin de simplification du déploiement de la technologie « Grid Computing » qui ne nécessite pas la participation des utilisateurs de terminaux clients appartenant au système distribué.

Le standard HTML5 (pour HyperText Markup Language 5 en anglais), utilisé pour la mise en œuvre de pages Internet, comporte une implémentation d'un mécanisme de « web workers » (ou travailleurs de la toile). Ce mécanisme « web workers » permet à un navigateur Internet mettant en œuvre le standard HTML5 d'exécuter en parallèle des traitements définis à l'aide de « threads », ou fils, définis dans la page Internet téléchargée par le navigateur Internet.

La technologie des « web workers » peut ainsi être utilisée pour mettre en œuvre un système distribué de « Grid Computing » en déportant les traitements de données à effecteur dans un « web worker ». Par exemple, lorsqu'un utilisateur se connecte sur une page Internet www.a.fr d'un domaine de navigation, son navigateur télécharge depuis le serveur du domaine de navigation, en même temps que la page Internet, le « web worker » défini dans cette page contenant les données et commandes de traitements à effectuer par son terminal. Le terminal effectue le traitement des données sans impacter la navigation de l'utilisateur dans la page Internet téléchargée ou le domaine de navigation. Lorsque le traitement des données est terminé, le navigateur Internet renvoie au serveur le résultat du traitement.

Cependant, le temps de traitement des données disponible est limité par le temps de navigation de l'utilisateur sur le domaine de navigation de la page Internet téléchargée. Ainsi, si l'utilisateur ferme sa connexion au domaine de navigation avant que le traitement des données à effectuer soit terminé, le traitement est abandonné et le résultat ne sera jamais remonté vers le serveur. Le serveur sera alors en vain dans l'attente de résultats et l'utilisation des ressources du terminal de l'utilisateur n'aura pas été utile. Ceci peut également poser des problèmes au niveau de la répartition des traitements à effecteur par le serveur. Pour des traitements longs, elle nécessite un découpage très fin des traitements de « Grid Computing » à effectuer pour des temps de traitements assez courts. Cela peut réduire le bénéfice de gain en temps de calculs apporté par la répartition des traitements, par exemple à cause de l'augmentation du volume de données à transmettre au terminal client pour effectuer le traitement, et donc un allongement du temps de transmission de ces données.

Cette mise en œuvre simple du « Grid Computing » par un « web worker » n'est pas adaptée à toutes les applications qui pourraient bénéficier des avantages du « Grid Computing ». Une telle mise en œuvre est décrite dans la demande de brevet US 2009/254998.

La publication de Litzkow M J et AL « Condor-a hunter of idle workstations » décrit un système de traitements répartis qui présente la particularité de permettre une sauvegarde et une restauration du contexte de calcul en cas d'interruption de manière à garantir l'achèvement des traitements. Ce système présente l'inconvénient de nécessiter une participation active des utilisateurs, ce qui limite son potentiel d'utilisation.

L'ouvrage d'Ido Green « Web Workers » ainsi que les demandes de brevets WO 2012/013893 A1 et FR 2 967 856 A1 présentent des techniques logicielles et procédés basées sur des « web workers » décrits plus hauts.

### Exposé de l'invention

Un des buts de l'invention est d'apporter des améliorations par rapport à l'état de la technique. Elle propose à cet effet un procédé de traitement de données dans un module de navigation. Le module de navigation dispose d'une base de données locale permettant l'enregistrement et l'accès à des données enregistrées par un ou des modules adaptés à être chargés dans le module de navigation et associés à un même nom de domaine dit domaine de navigation commun. Le procédé de traitement de données comprend les étapes de :
- chargement par le module de navigation d'une première page Web appartenant à un domaine de navigation distinct du domaine de navigation commun,
- chargement dans le module de navigation d'un premier module de travail associé à la première page Web et appartenant au domaine de navigation commun,
- obtention par le premier module de travail d'un groupe d'instructions de traitement de données et d'un groupe de données à traiter à partir d'un serveur appartenant au domaine de navigation commun,
- traitement par le premier module de travail, selon au moins une instruction du groupe d'instructions d'au moins une donnée du groupe de données à traiter,
- stockage par le premier module de travail, dans la base de données locale, d'au moins une instruction restante à exécuter et d'au moins une donnée de résultat intermédiaire obtenue par le traitement de la au moins une donnée à traiter,
- suite au chargement par le module de navigation d'une nouvelle page Web appartenant à un domaine de navigation distinct du domaine de navigation commun, et au chargement dans le module de navigation d'un nouveau module de travail associé à la nouvelle page Web et appartenant au domaine de navigation commun, traitement de la au moins une donnée de résultat intermédiaire, selon au moins l'instruction restante stockée,
- les étapes de stockage, de chargement d'une nouvelle page Web, de chargement d'un nouveau module de travail et de traitement étant itérées jusqu'à l'obtention d'un résultat final obtenu quand toutes les instructions du groupe d'instructions ont été exécutées et,
- envoi du résultat final au serveur appartenant au domaine de navigation commun.

Le procédé selon l'invention permet ainsi d'effectuer facilement des traitements de données de manière distribué adapté à n'importe quelle application. La longueur de chaque tâche distribuée n'est pas impactée par des interruptions volontaires ou involontaires de l'utilisateur du terminal sur lequel la tâche est exécutée. Les ressources, le découpage en tâches et la distribution des traitements sont ainsi optimisés.

Les différents modes ou caractéristiques de réalisation mentionnés ci-après peuvent être ajoutés indépendamment ou en combinaison les uns avec les autres, aux étapes du procédé défini ci-dessus.

Selon un mode particulier de réalisation de l'invention, la première page Web et/ou la nouvelle page Web appartient à un domaine de navigation distinct du domaine de navigation commun.

Le traitement des données peut ainsi être distribué par un service de « Grid Computing » indépendant, différent du domaine de navigation consulté par l'utilisateur. Le procédé selon l'invention permet ainsi de distribuer les traitements de manière générique, sans être lié à un domaine de navigation consulté particulier.

Selon un autre mode particulier de réalisation de l'invention, la première page Web appartient à un domaine de navigation distinct du domaine de navigation de la nouvelle page Web.

Le procédé selon l'invention permet ainsi d'effectuer des traitements de données de manière distribué sans que la distribution des traitements soit limitée à un unique domaine de navigation. Le traitement des données peut ainsi être relancé à partir de la consultation d'un utilisateur parmi une grande diversité de domaine de navigation, ou de sites Internet différents.

Selon un autre mode particulier de réalisation de l'invention, le chargement du premier module de travail est provoqué par la présence dans la première page Web d'une référence au domaine de navigation commun.

L'utilisation de la base de données locale associée à l'utilisation d'un domaine de navigation commun permet ainsi de partager le résultat intermédiaire entre les premier et deuxième modules de travail. Le procédé selon l'invention permet d'éviter ainsi l'usage d'une entité tierce disposée hors du module de navigation pour le partage du résultat intermédiaire et la reprise du traitement. Selon un autre mode particulier de réalisation de l'invention, la référence au domaine de navigation commun est contenue dans une autre page Web contenue dans la première page Web, l'autre page Web contenant des instructions à exécuter par le module de navigation permettant le chargement du premier module de travail. Ce mode de réalisation permet un développement des pages Web par les informaticiens de manière rapide et une réutilisation plus facile.

Selon un autre mode particulier de réalisation de l'invention, l'étape de stockage est provoquée par la fermeture de la première page Web dans le module de navigation ou par la fermeture du module de navigation. Le traitement des données non terminé n'est ainsi par perdu lorsque l'utilisateur arrête la consultation d'une page Web ayant permis le lancement du traitement.

Selon un autre mode particulier de réalisation de l'invention, le procédé comprend une étape de contrôle dans les données stockées dans la base de données locale, de la fin de traitement selon la au moins une instruction, et une étape d'obtention par le nouveau module de travail d'au moins un nouveau groupe d'instructions de traitement si le traitement selon le groupe d'instruction est terminé.

L'invention concerne aussi un dispositif de traitement de données dans un module de navigation comprenant des moyens adaptés à mettre en œuvre le procédé traitement de données décrit précédemment selon l'un quelconque des modes particuliers de réalisation.

Dans un mode particulier de réalisation, les différentes étapes du procédé sont déterminées par des instructions de programmes d'ordinateurs.

En conséquence, l'invention vise aussi des programmes d'ordinateur sur un support d'informations, ces programmes étant susceptibles d'être mis en œuvre respectivement dans un terminal ou plus généralement dans un ordinateur, ces programmes comportant respectivement des instructions adaptées à la mise en œuvre des étapes les différentes étapes des procédés qui viennent d'être décrit.

Ces programmes peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution des procédés en question.

### Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels:
- la figure 1 présente un environnement de mise en œuvre de l'invention selon un mode particulier de réalisation de l'invention,
- la figure 2 présente des étapes du procédé de traitement de données selon un mode particulier de réalisation de l'invention,
- la figure 3 présente une architecture d'un dispositif permettant de mettre en œuvre l'invention selon un mode particulier de réalisation de l'invention.

### Description d'un mode particulier de réalisation de l'invention

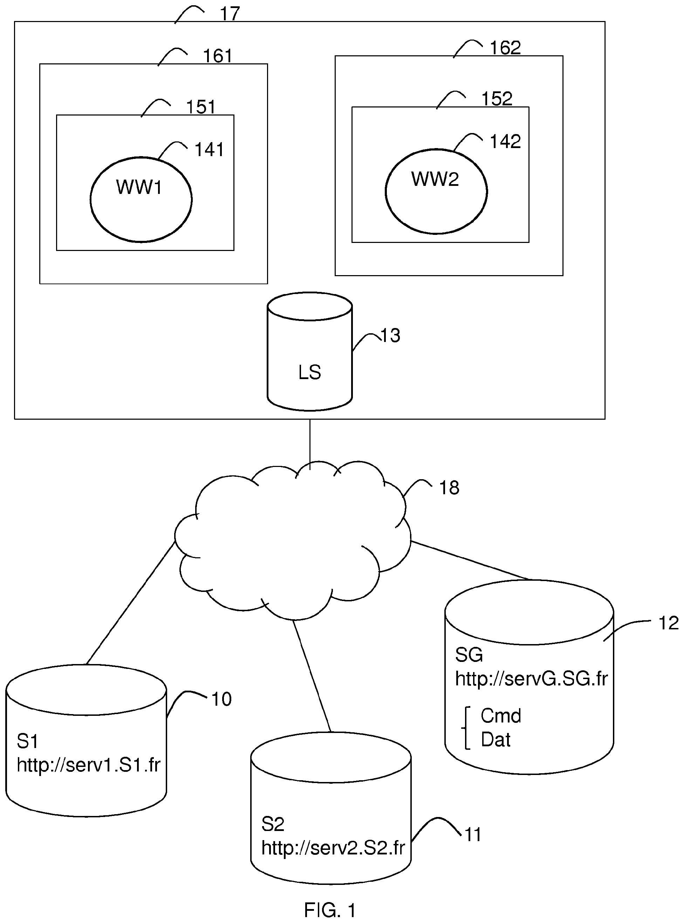

La figure 1 présente un environnement de mise en œuvre de l'invention selon un mode particulier de réalisation de l'invention. La figure 1 illustre un module de navigation 17 exécuté par un terminal (non représenté) d'un utilisateur connecté à un réseau de télécommunication 18, par exemple un réseau IP (pour Internet Protocol en anglais). Le module de navigation est communément appelé navigateur Internet dans le langage courant.

Le module de navigation 17 a notamment pour fonction de permettre à un utilisateur d'accéder et d'interagir avec un ensemble de pages d'une application. Plus particulièrement, le module de navigation 17 permet de télécharger des pages Web mettant en œuvre une application web, ces pages appartenant à un domaine de navigation et étant fournies par un serveur de gestion du domaine de navigation en question. Le module de navigation 17 comporte dans ce but au moins un client apte à communiquer selon le protocole de transfert hypertexte ou en anglais « HyperText Transfer Protocol » (HTTP) avec un serveur distant HTTP. De telles pages sont décrites par exemple en langage hypertexte de balisage ou en anglais « Hypertext Markup Language » (HTML). Des données de formatage de page, nommées feuilles de style, usuellement codées au format CSS (Cascading Style Sheet), sont jointes à cette page codée en HTML. La page HTML contient en outre (ou est transmise avec) des codes de programme, usuellement sous forme de Javascript, destinés à être interprétés et exécutés par le module de navigation lors du chargement de la page. Le module de navigation 17 comporte ainsi un moteur pour interpréter le code HTML, les données de formatage et les codes de programme, afin d'exécuter les fonctions codées par les codes de programme, puis de générer, mettre en forme et afficher les pages Web téléchargées.

La notion de domaine de navigation est à interpréter au sens large: il s'agit d'un domaine Web ou pages ayant un même nom de domaine. Par exemple, toutes les pages dont l'URL contient www.xxxx.fr et/ou www.xxxx.com et/ou bbb.xxxx.com, où "xxxx" représente le nom du domaine en question.

Selon un mode particulier de réalisation de l'invention, le module de navigation 17 est par exemple compatible avec le langage HTML5 (pour HyperText Markup Language 5). Il dispose d'une base de données locale 13 (LS) permettant l'enregistrement et l'accès à des données enregistrées par une ou plusieurs pages web appartenant à un domaine de navigation commun.

La base de données locale 13 stocke les données dans un espace de stockage du terminal de l'utilisateur, cet espace de stockage étant réservé au module de navigation.

En outre, les termes « local » et « localement » sont à considérer par rapport au module de navigation 17 et ses composants. Ainsi une donnée stockée localement correspond, par la suite, à une donnée accessible directement par le module de navigation 17, sans faire appel ni à une entité distante du terminal de l'utilisateur comme un serveur web distant, ni à une entité exécutée dans l'environnement logiciel du terminal de l'utilisateur mais supportée par des processus non initiés par le module de navigation 17, comme un serveur de base de données exécuté dans l'environnement logiciel dans un processus n'appartenant pas au module de navigation 17.

Le module de navigation 17 est également apte à interpréter du code source permettant d'instancier en tâche de fond des objets de type web worker effectuant des opérations dans le navigateur en parallèle de la navigation Internet d'un utilisateur du terminal.

L'environnement comprend également deux serveurs 10 et 11 hébergeant des sites Internet ou des pages Internet proposant respectivement des services S1, S2. L'environnement comprend aussi un serveur 12 comprenant un service SG de « Grid Computing ». Pour une application donnée, le serveur 12 stocke les instructions (Cmd) des traitements à effectuer pour cette application et les données (Dat) à traiter.

Par exemple, l'utilisateur souhaite se connecter à un site Internet pour accéder à un service S1. Le service S1 est par exemple accessible à l'adresse http://www.serv1.S1.fr et est hébergé sur le serveur 10 du réseau de télécommunication. Le module de navigation 17 se connecte alors au serveur 10 et charge une page web 161 correspondant par exemple à la page d'accueil du service S1, depuis le serveur 10. La page web 161 appartient au domaine de navigation du service S1. Le chargement de la page web est effectué par le téléchargement sur le terminal de l'utilisateur du code source de la page web 161. Ce code source est interprété par le module de navigation pour afficher à l'utilisateur le contenu visuel de la page web correspondant au service S1. Le code source téléchargé comprend également des contenus qui ne sont pas destinés à être affichés à l'utilisateur et qui sont destinés à être exécutés par le module de navigation 17 pour assurer le service S1 ou d'autres services.

Le code source de la page web 161 contient un cadre 151, autrement appelé iFrame dans le langage informatique, qui est hébergé sur le serveur de « Grid Computing » 12, par exemple accessible à l'adresse http://www.servG.SG.fr. Le cadre 151 appartient au domaine de navigation SG du serveur 12.

Le module de navigation 17 charge le contenu du cadre 151 depuis le serveur 12. Le contenu du cadre 151 correspond au code source définissant le cadre 151. Ce code source contient des instructions qui permettent d'instancier un web worker 141 (WW1) du module de navigation 17. Les instructions (Cmd) à exécuter par le web worker 141 sont téléchargées depuis le serveur 12, ainsi qu'un ensemble de données à traiter (Dat). Le cadre 151 constitue ainsi un conteneur du web worker 141.

Le web worker 141 effectue le traitement des données téléchargées en tâche de fond sans gêner l'utilisateur du terminal lors de la consultation du service S1.

Lorsque l'utilisateur ferme la page web 161 ou le module de navigation 17, le web worker 141 est tué et le traitement des données est interrompu. Le résultat intermédiaire obtenu à l'interruption du traitement des données est sauvegardé dans la base de données locale 13 du module de navigation 17 par le cadre 151. De même, les instructions restantes à exécuter et le reste des données à traiter sont également sauvegardées dans la base de données locale 13.

De façon connue, la base de données locale 13 est cloisonnée par domaine de navigation. Les données stockées par le cadre 151 sont donc identifiées dans la base de données locale 13 comme appartenant au domaine de navigation SG du serveur 12.

Ultérieurement, par exemple l'utilisateur souhaite se connecter à un autre site Internet pour accéder à un service S2, par exemple accessible à l'adresse http://www.serv2.S2.fr et hébergé sur le serveur 11 du réseau de télécommunication 18. Le module de navigation 17 se connecte alors au serveur 11 et charge une page web 162 correspondant par exemple à la page d'accueil du service S2, depuis le serveur 11. La page web 162 appartient au domaine de navigation du service S2.

Le code source de la page web 162 contient un cadre 152 qui est hébergé sur le serveur de « Grid Computing » 12. Le cadre 152 appartient au domaine de navigation SG du serveur 12.

Le module de navigation 17 charge le contenu du cadre 152 depuis le serveur 12. Ce code source contient des instructions qui permettent au cadre 152 de récupérer dans la base de données locale 13 le résultat intermédiaire stocké au préalable et d'instancier un web worker 142 (WW2) du module de navigation 17 afin de reprendre le traitement des données selon les instructions restantes stockées.

Dans le cas où le traitement des données effectué par le précédent web worker 141 s'était achevé correctement, le cadre 152 ne récupère pas le résultat intermédiaire et télécharge depuis le serveur de « Grid Computing » 12 de nouvelles instructions et de nouvelles données à traiter par le web worker 142.

Lorsque toutes les instructions (Cmd) pour traiter les données (Dat) ont été exécutées, le résultat final est renvoyé par le cadre 152, ou 151 si le traitement s'était achevé lors de l'exécution par le précédent web worker 141, au serveur 12.

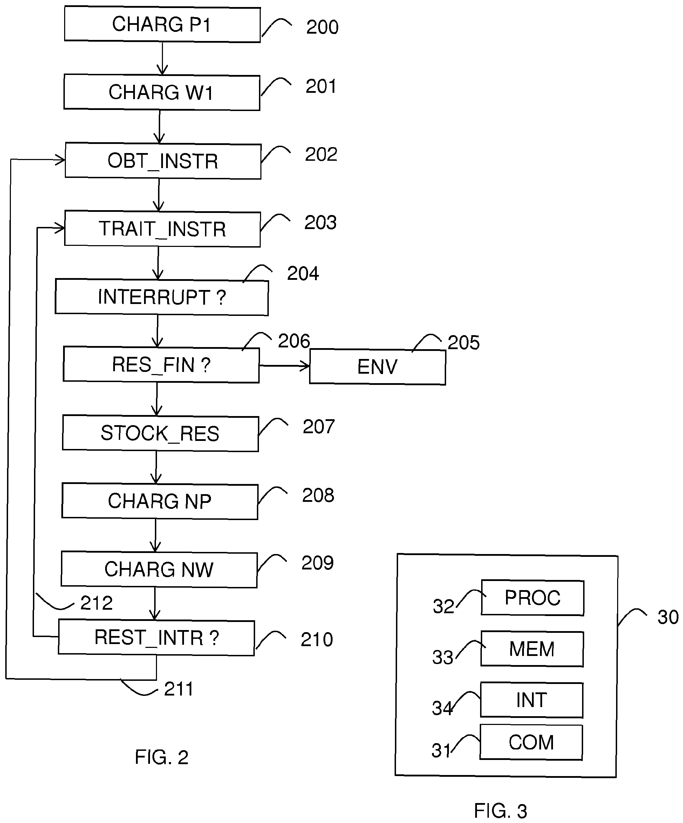

La figure 2 présente des étapes du procédé de traitement de données selon un mode particulier de réalisation de l'invention.

Le procédé de traitement de données est mis en œuvre dans un module de navigation, par exemple le module de navigation 17 de la figure 1. Le procédé comprend une étape de chargement 200 par le module de navigation d'une première page Web, par exemple la page Internet 161 de la figure 1, appartenant à un premier domaine de navigation D1.

Lors d'une étape 201, un premier module de travail est chargé dans le module de navigation. Ce premier module de travail est associé à la première page Web et correspond par exemple au web worker 141 de la figure 1. Le premier module de travail appartient à un domaine de navigation DW. Le premier module de travail peut aussi correspondre à un ensemble formé par le web worker 141 et le cadre 151 de la figure 1.

Selon un mode particulier de réalisation de l'invention, la première page Web appartient à un domaine de navigation D1 distinct du domaine de navigation DW du premier module de travail. Selon un autre mode particulier de réalisation de l'invention, le chargement du premier module de travail est provoqué par la présence dans la première page Web d'une référence au domaine de navigation DW.

Selon une variante de ce mode particulier de réalisation de l'invention, la référence au domaine de navigation DW est contenue dans une autre page Web (PWA) contenue dans la première page Web, par exemple le cadre 151 de la figure 1. L'autre page Web (PWA) contient des instructions à exécuter par le module de navigation permettant le chargement du premier module de travail.

Lors d'une étape 202, le premier module de travail obtient un groupe d'instructions pour traiter des données et un groupe de données à traiter à partir d'un serveur appartenant au domaine de navigation DW, par exemple le serveur 12 de la figure 1. Par exemple, le premier module de travail obtient les instructions et les données à traiter grâce au cadre 151 de la figure 1 qui charge ces données depuis un serveur.

Lors de l'étape 203, le premier module de travail effectue le traitement selon au moins une instruction du groupe d'instructions d'au moins une donnée du groupe de données à traiter.

Lors d'une étape 204, une interruption du traitement des données est détectée.

Si l'interruption du traitement des données correspond à la fin de l'exécution de la dernière instruction à exécuter et donc à l'obtention d'un résultat final issu du traitement des données (étape 206), le résultat final est envoyé par le module de travail au serveur appartenant au domaine de navigation DW.

Selon un mode particulier de réalisation de l'invention, le résultat final est envoyé au serveur par la page Web (PWA) appartenant au domaine de navigation DW et ayant permis le chargement du module de navigation.

Si lors de l'étape 206, l'interruption du traitement des données ne correspond pas à l'obtention du résultat final, un résultat intermédiaire obtenu par le traitement des données déjà effectué est stocké dans la base de données locale du module de navigation, par le premier module de navigation, lors d'une étape 207.

Selon un mode particulier de réalisation de l'invention, les instructions restantes et les données restant à traiter sont aussi stockées dans la base de données locale.

Selon un autre mode particulier de réalisation de l'invention, une information indiquant quelles instructions et données restant à traiter est stockée à la place des instructions et des données restantes.

Selon un mode particulier de réalisation de l'invention, l'interruption du traitement des données est provoquée par la fermeture de la première page Web dans le module de navigation.

Selon un autre mode particulier de réalisation de l'invention, cette interruption est provoquée par la fermeture du module de navigation.

Suite au chargement par le module de navigation d'une nouvelle page Web lors d'une étape 208, un nouveau module de travail est chargé dans le module de navigation lors d'une étape 209. Ce nouveau module de travail est associé à la nouvelle page Web et correspond par exemple au web worker 142 de la figure 1. Le nouveau module de travail appartient au domaine de navigation DW. Le nouveau module de travail peut aussi correspondre à un ensemble formé par le web worker 142 et le cadre 152 de la figure 1.

Selon un mode particulier de réalisation de l'invention, la nouvelle page Web appartient à un domaine de navigation D2 distinct du domaine de navigation DW du nouveau module de travail. Selon un autre mode particulier de réalisation de l'invention, le domaine de navigation D1 de la première page Web est distinct du domaine de navigation D2 de la nouvelle page Web.

Selon un mode particulier de réalisation de l'invention, le procédé comprend une étape 210 de contrôle dans la base de données locale de la fin de traitement des données. Cette étape de contrôle peut être effectuée à partir des instructions et des données restantes stockées dans la base de données locale ;

Selon une variante, l'étape de contrôle est effectuée à partir de l'information indiquant quelles instructions et données restantes sont à traiter. Dans cette variante, le procédé comprend une étape supplémentaire d'obtention depuis le serveur appartenant au domaine de navigation DW, des instructions et données restantes à traiter si l'information indique que le traitement des données n'était pas terminé lors du stockage.

Dans le cas où le traitement des données est terminé (via 211), le procédé reprend à l'étape 202 d'obtention par le nouveau module de travail de nouvelles instructions et données à traiter.

Dans le cas où le traitement des données n'est pas terminé (via 212), le procédé reprend à l'étape 203 de traitement des données restantes selon les instructions restant à exécuter, à partir du résultat intermédiaire stocké dans la base de données locale.

Les étapes de stockage suite à la détection d'une interruption en 207, de chargement d'une nouvelle page Web en 208, de chargement d'un nouveau module de travail en 209 et de traitement en 203 sont itérées jusqu'à l'obtention d'un résultat final obtenu quand toutes les instructions du groupe d'instructions ont été exécutées.

Le résultat final est alors envoyé en 205 au serveur appartenant au domaine de navigation DW.

La figure 3 présente une architecture d'un dispositif 30 permettant de mettre en œuvre le procédé de traitement de données dans un module de navigation selon un mode particulier de réalisation de l'invention. Le dispositif comportant une unité de traitement 32, équipée par exemple d'un microprocesseur (PROC). L'unité de traitement 32 comporte des moyens de calcul (PROC) et de mémorisation (MEM) pour mettre en œuvre un environnement logiciel. L'environnement logiciel est typiquement composé d'un micro-logiciel autonome ou « firmware » en anglais, d'un gestionnaire de démarrage ou « boot loader » en anglais, d'un système d'exploitation comprenant des composants logiciels. A titre d'exemple non limitatif, le système d'exploitation peut être un système d'exploitation pour terminal mobile ou pour ordinateur personnel.

L'environnement logiciel mis en œuvre par le dispositif 30 est adapté pour exécuter un module de navigation, tel que le module de navigation 17 de la figure 1. Le dispositif 30 comprend en outre un espace de stockage 33 telle qu'une mémoire par exemple permettant de stocker les données de la base de données locale du module de navigation 17.

Le dispositif comprend également une interface utilisateur 34 (INT) permettant à l'utilisateur d'interagir avec le dispositif 30.

Le dispositif comporte aussi une unité d'accès à un réseau 31 (COM) permettant par exemple au dispositif 30 d'accéder à Internet via différents réseaux de communications, comme par exemple un réseau de téléphonie mobile, un réseau informatique, ou un réseau satellitaire.

Afin de mettre en œuvre le procédé de traitement de données par le module de navigation, le module de navigation charge les codes de programmes des pages Web et les codes de programmes correspondant aux instructions de traitement de données grâce à l'interface réseau 31. L'environnement logiciel mis en œuvre par le dispositif 30 est apte à interpréter et exécuter les codes de programmes chargés grâce à l'unité de traitement 32 et à la mémoire 33.

Le dispositif 30 est compris dans un terminal tel que par exemple un ordinateur personnel, fixe ou mobile, un téléphone mobile, une tablette.

## Revendications

1. Procédé de traitement de données dans un module de navigation, le module de navigation (17) disposant d'une base de données locale (13) permettant l'enregistrement et l'accès à des données enregistrées par un ou des modules adaptés à être chargés dans le module de navigation et associés à un même nom de domaine dit domaine de navigation commun, **caractérisé en ce qu'**il comprend les étapes suivantes:
- chargement (200) par le module de navigation d'une première page Web (161) appartenant à un domaine de navigation distinct du domaine de navigation commun,
- chargement (201) dans le module de navigation d'un premier module de travail (151, 141) associé à la première page Web et appartenant au domaine de navigation commun,
- obtention (202) par le premier module de travail d'un groupe d'instructions de traitement de données et d'un groupe de données à traiter à partir d'un serveur (12) appartenant au domaine de navigation commun,
- traitement (203) par le premier module de travail, selon au moins une instruction du groupe d'instructions d'au moins une donnée du groupe de données à traiter,
- stockage (207) par le premier module de travail, dans la base de données locale, d'au moins une instruction restante à exécuter et d'au moins une donnée de résultat intermédiaire obtenue par le traitement de la au moins une donnée à traiter,
- suite au chargement (208) par le module de navigation d'une nouvelle page Web (162) appartenant à un domaine de navigation distinct du domaine de navigation commun, et au chargement (209) dans le module de navigation d'un nouveau module de travail (152, 142) associé à la nouvelle page Web et appartenant au domaine de navigation commun, traitement (203) de la au moins une donnée de résultat intermédiaire, selon au moins l'instruction restante stockée,
- les étapes de stockage (207), de chargement (208) d'une nouvelle page Web, de chargement (209) d'un nouveau module de travail et de traitement (203) étant itérées jusqu'à l'obtention (206) d'un résultat final obtenu quand toutes les instructions du groupe d'instructions ont été exécutées et,
- envoi (205) du résultat final au serveur appartenant au domaine de navigation commun.

2. Procédé selon la revendication 1 **caractérisé en ce que** la première page Web appartient à un domaine de navigation distinct du domaine de navigation de la nouvelle page Web.

3. Procédé selon l'une quelconque des revendications 1 ou 2 **caractérisé en ce que** le chargement du premier module de travail est provoqué par la présence dans la première page Web d'une référence au domaine de navigation commun.

4. Procédé selon la revendication 3 **caractérisé en ce que** la référence au domaine de navigation commun est contenue dans une autre page Web (151, 152) contenue dans la première page Web, l'autre page Web contenant des instructions à exécuter par le module de navigation permettant le chargement du premier module de travail.

5. Procédé selon l'une quelconque des revendications 1 à 4 **caractérisé en ce que** l'étape de stockage est provoquée par la fermeture de la première page Web dans le module de navigation ou par la fermeture du module de navigation.

6. Procédé selon l'une quelconque des revendications 1 à 5 **caractérisé en ce qu'**il comprend une étape de contrôle (210) dans les données stockées dans la base de données locale, de la fin de traitement selon la au moins une instruction, et une étape d'obtention (202) par le nouveau module de travail d'au moins un nouveau groupe d'instructions de traitement si le traitement selon le groupe d'instruction est terminé.

7. Programme d'ordinateur comportant des instructions pour l'exécution du procédé de traitement de données selon l'une quelconque des revendications 1 à 6, lorsque le programme est exécuté par un processeur.

8. Support d'enregistrement lisible par un processeur sur lequel est enregistré un programme d'ordinateur comportant des instructions pour l'exécution du procédé de traitement de données selon l'une quelconque des revendications 1 à 6, lorsque le programme est exécuté par un processeur.

9. Dispositif de traitement de données dans un module de navigation, le module de navigation disposant d'une base de données locale permettant l'enregistrement et l'accès à des données enregistrées par un ou des modules adaptés à être chargés dans le module de navigation et associés à un même nom de domaine dit domaine de navigation commun, **caractérisé en ce qu'**il comprend:
- des moyens de chargement (31) par le module de navigation d'une page Web appartenant à un domaine de navigation distinct du domaine de navigation commun,
- des moyens de chargement (31) dans le module de navigation d'un module de travail associé à la page Web et appartenant au domaine de navigation commun,
- des moyens d'obtention (31) par le module de travail d'un groupe d'instructions de traitement de données et d'un groupe de données à traiter à partir d'un serveur appartenant au domaine de navigation commun,
- des moyens de traitement (32, 33) par le module de travail, selon au moins une instruction du groupe d'instructions d'au moins une donnée du groupe de données à traiter,
- des moyens de stockage (33) par le module de travail, dans la base de données locale, d'au moins une instruction restante à exécuter et d'au moins une donnée de résultat intermédiaire obtenue par le traitement de la au moins une donnée à traiter,
- des moyens de traitement (32, 33) de la au moins une donnée de résultat intermédiaire, selon au moins l'instruction restante stockée, suite au chargement par le module de navigation d'une nouvelle page Web appartenant à un domaine de navigation distinct du domaine de navigation commun, et au chargement dans le module de navigation d'un nouveau module de travail associé à la nouvelle page Web et appartenant au domaine de navigation commun,
- des moyens d'itération (32, 33) des étapes de stockage, de chargement d'une nouvelle page Web, de chargement d'un nouveau module de travail et de traitement jusqu'à l'obtention d'un résultat final obtenu quand toutes les instructions du groupe d'instructions ont été exécutées et,
- des moyens d'envoi (34) du résultat final au serveur appartenant au domaine de navigation commun.

## Patentansprüche

1. Verfahren zur Verarbeitung von Daten in einem Navigationsmodul, wobei das Navigationsmodul (17) über eine lokale Datenbank (13) verfügt, die das Speichern und das Zugreifen auf Daten ermöglicht, die von einem oder mehreren Modulen gespeichert werden, die geeignet sind, in das Navigationsmodul geladen zu werden und demselben Domänennamen, gemeinsame Navigationsdomäne genannt, zugeordnet sind, **dadurch gekennzeichnet, dass** es die folgenden Schritte umfasst:
- Laden (200) einer erste Webseite (161), die zu einer von der gemeinsamen Navigationsdomäne verschiedenen Navigationsdomäne gehört, durch das Navigationsmodul,
- Laden (201) eines ersten Arbeitsmoduls (151, 141), das der ersten Webseite zugeordnet ist und zu der gemeinsamen Navigationsdomäne gehört, in das Navigationsmodul,
- Erhalten (202) einer Gruppe von Datenverarbeitungsbefehlen und einer Gruppe von zu verarbeitenden Daten ausgehend von einem zu der gemeinsamen Navigationsdomäne gehörenden Server (12) durch das erste Arbeitsmodul,
- Verarbeiten (203) mindestens eines Datenelements der Gruppe von zu verarbeitenden Daten gemäß mindestens einem Befehl der Gruppe von Befehlen durch das erste Arbeitsmodul,
- Speichern (207) mindestens eines verbleibenden auszuführenden Befehls und mindestens eines Zwischenergebnis-Datenelements, das durch die Verarbeitung des mindestens einen zu verarbeitenden Datenelements erhalten wird, durch das erste Arbeitsmodul in der lokalen Datenbank,
- nach dem Laden (208) einer neuen Webseite (162), die zu einer von der gemeinsamen Navigationsdomäne verschiedenen Navigationsdomäne gehört, durch das Navigationsmodul und dem Laden (209) eines neuen Arbeitsmoduls (152, 142), das der neuen Webseite zugeordnet ist und zu der gemeinsamen Navigationsdomäne gehört, in das Navigationsmodul, Verarbeiten (203) des mindestens einen Zwischenergebnis-Datenelements mindestens gemäß dem gespeicherten verbleibenden Befehl,
- wobei die Schritte des Speicherns (207), des Ladens (208) einer neuen Webseite, des Ladens (209) eines neuen Arbeitsmoduls und des Verarbeitens (203) bis zum Erhalten (206) eines Endergebnisses wiederholt werden, das erhalten wird, wenn alle Befehle der Gruppe von Befehlen ausgeführt worden sind, und
- Senden (205) des Endergebnisses an den zu der gemeinsamen Navigationsdomäne gehörenden Server.

2. Verfahren nach Anspruch 1, **dadurch gekennzeichnet, dass** die erste Webseite zu einer Navigationsdomäne gehört, die verschieden von der Navigationsdomäne der neuen Webseite ist.

3. Verfahren nach einem der Ansprüche 1 oder 2, **dadurch gekennzeichnet, dass** das Laden des ersten Arbeitsmoduls durch das Vorhandensein eines Verweises auf die gemeinsame Navigationsdomäne in der ersten Webseite ausgelöst wird.

4. Verfahren nach Anspruch 3, **dadurch gekennzeichnet, dass** der Verweis auf die gemeinsame Navigationsdomäne in einer anderen Webseite (151, 152) enthalten ist, die in der ersten Webseite enthalten ist, wobei die andere Webseite vom Navigationsmodul auszuführende Befehle enthält, die das Laden des ersten Arbeitsmoduls ermöglichen.

5. Verfahren nach einem der Ansprüche 1 bis 4, **dadurch gekennzeichnet, dass** der Schritt des Speicherns durch das Schließen der ersten Webseite im Navigationsmodul oder durch das Schließen des Navigationsmoduls ausgelöst wird.

6. Verfahren nach einem der Ansprüche 1 bis 5, **dadurch gekennzeichnet, dass** es einen Schritt der Kontrolle (210) des Verarbeitungsendes gemäß dem mindestens einen Befehl in den in der lokalen Datenbank gespeicherten Daten umfasst und einen Schritt des Erhaltens (202) mindestens einer neuen Gruppe von Verarbeitungsbefehlen durch das neue Arbeitsmodul, wenn die Verarbeitung gemäß der Gruppe von Befehlen abgeschlossen ist.

7. Computerprogramm mit Befehlen, die bei der Ausführung des Programms durch einen Prozessor das Datenverarbeitungsverfahren nach einem der Ansprüche 1 bis 6 ausführen.

8. Von einem Prozessor lesbares Speichermedium, auf dem ein Computerprogramm gespeichert ist, das Befehle umfasst, die bei der Ausführung des Programms durch einen Prozessor das Datenverarbeitungsverfahren nach einem der Ansprüche 1 bis 6 ausführen.

9. Datenverarbeitungsvorrichtung in einem Navigationsmodul, wobei das Navigationsmodul über eine lokale Datenbank verfügt, die das Speichern und das Zugreifen auf Daten ermöglicht, die von einem oder mehreren Modulen gespeichert werden, die geeignet sind, in das Navigationsmodul geladen zu werden und demselben Domänennamen, gemeinsame Navigationsdomäne genannt, zugeordnet sind, **dadurch gekennzeichnet, dass** es umfasst:
- Mittel zum Laden (31) einer Webseite, die zu einer von der gemeinsamen Navigationsdomäne verschiedenen Navigationsdomäne gehört, durch das Navigationsmodul,
- Mittel zum Laden (31) eines Arbeitsmoduls, das der ersten Webseite zugeordnet ist und zu der gemeinsamen Navigationsdomäne gehört, in das Navigationsmodul,
- Mittel zum Erhalten (31) einer Gruppe von Datenverarbeitungsbefehlen und einer Gruppe von zu verarbeitenden Daten ausgehend von einem zu der gemeinsamen Navigationsdomäne gehörenden Server durch das Arbeitsmodul,
- Mittel zum Verarbeiten (32, 33) mindestens eines Datenelements der Gruppe von zu verarbeitenden Daten gemäß mindestens einem Befehl der Gruppe von Befehlen durch das Arbeitsmodul,
- Mittel zum Speichern (33) mindestens eines verbleibenden auszuführenden Befehls und mindestens eines Zwischenergebnis-Datenelements, das durch die Verarbeitung des mindestens einen zu verarbeitenden Datenelements erhalten wird, durch das Arbeitsmodul in der lokalen Datenbank,
- Mittel zum Verarbeiten (32, 33) des mindestens einen Zwischenergebnis-Datenelements gemäß mindestens dem gespeicherten verbleibenden Befehl nach dem Laden einer neuen Webseite, die zu einer von der gemeinsamen Navigationsdomäne verschiedenen Navigationsdomäne gehört, durch das Navigationsmodul und dem Laden eines neuen Arbeitsmoduls, das der neuen Webseite zugeordnet ist und zu der gemeinsamen Navigationsdomäne gehört, in das Navigationsmodul,
- Mittel zum Wiederholen (32, 33) der Schritte des Speicherns, des Ladens einer neuen Webseite, des Ladens eines neuen Arbeitsmoduls und des Verarbeitens bis zum Erhalten eines Endergebnisses, das erhalten wird, wenn alle Befehle der Gruppe von Befehlen ausgeführt worden sind, und
- Mittel zum Senden (34) des Endergebnisses an den zu der gemeinsamen Navigationsdomäne gehörenden Server.

## Claims

1. Method for processing data in a navigation module, the navigation module (17) having a local database (13) allowing recording and access to data recorded by one or more modules adapted to be loaded into the navigation module and belonging to one and the same domain name termed common navigation domain, **characterized in that** it comprises the following steps:
- loading (200) by the navigation module of a first Web page (161) belonging to a navigation domain distinct from the common navigation domain,
- loading (201) into the navigation module of a first work module (151, 141) associated with the first Web page and belonging to the common navigation domain,
- obtaining (202) by the first work module of a group of instructions for processing data and of a group of data to be processed on the basis of a server (12) belonging to the common navigation domain,
- processing (203) by the first work module, according to at least one instruction of the group of instructions of at least one datum of the group of data to be processed,
- storage (207) by the first work module, in the local database, of at least one remaining instruction to be executed and of at least one intermediate result datum obtained by the processing of the at least one datum to be processed,
- subsequent to the loading (208) by the navigation module of a new Web page (162) belonging to a navigation domain distinct from the common navigation domain, and to the loading (209) into the navigation module of a new work module (152, 142) associated with the new Web page and belonging to the common navigation domain, processing (203) of the at least one intermediate result datum, according to at least the stored remaining instruction,
- the steps of storage (207), of loading (208) of a new Web page, of loading (209) of a new work module and of processing (203) being iterated until the obtaining (206) of a final result obtained when all the instructions of the group of instructions have been executed and,
- dispatching (205) of the final result to the server belonging to the common navigation domain.

2. Method according to Claim 1, **characterized in that** the first Web page belongs to a navigation domain distinct from the navigation domain of the new Web page.

3. Method according to either one of Claims 1 or 2, **characterized in that** the loading of the first work module is prompted by the presence in the first Web page of a reference to the common navigation domain.

4. Method according to Claim 3, **characterized in that** the reference to the common navigation domain is contained in another Web page (151, 152) contained in the first Web page, the other Web page containing instructions to be executed by the navigation module allowing the loading of the first work module.

5. Method according to any one of Claims 1 to 4, **characterized in that** the storage step is prompted by the closing of the first Web page in the navigation module or by the closing of the navigation module.

6. Method according to any one of Claims 1 to 5, **characterized in that** it comprises a step of checking (210), in the data stored in the local database, the end of processing according to the at least one instruction, and a step of obtaining (202) by the new work module of at least one new group of processing instructions if the processing according to the instruction group has terminated.

7. Computer program comprising instructions for the execution of the method for processing data according to any one of Claims 1 to 6, when the program is executed by a processor.

8. Recording medium readable by a processor on which is recorded a computer program comprising instructions for the execution of the method for processing data according to any one of Claims 1 to 6, when the program is executed by a processor.

9. Device for processing data in a navigation module, the navigation module having a local database allowing recording and access to data recorded by one or more modules adapted to be loaded into the navigation module and associated with one and the same domain name termed common navigation domain, **characterized in that** it comprises:
- means (31) of loading by the navigation module of a Web page belonging to a navigation domain distinct from the common navigation domain,
- means (31) of loading into the navigation module of a work module associated with the Web page and belonging to the common navigation domain,
- means (31) of obtaining by the work module of a group of instructions for processing data and of a group of data to be processed on the basis of a server belonging to the common navigation domain,
- means (32, 33) of processing by the work module, according to at least one instruction of the group of instructions, of at least one datum of the group of data to be processed,
- means (33) of storage by the work module, in the local database, of at least one remaining instruction to be executed and of at least one intermediate result datum obtained by the processing of the at least one datum to be processed,
- means (32, 33) of processing of the at least one intermediate result datum, according to at least the stored remaining instruction, subsequent to the loading by the navigation module of a new Web page belonging to a navigation domain distinct from the common navigation domain, and to the loading into the navigation module of a new work module associated with the new Web page and belonging to the common navigation domain,
- means (32, 33) of iteration of the steps of storage, of loading of a new Web page, of loading of a new work module and of processing until the obtaining of a final result obtained when all the instructions of the group of instructions have been executed and,
- means (34) of dispatching of the final result to the server belonging to the common navigation domain.
